# EUROPÄISCHE PATENTSCHRIFT

(11) **EP 4 361 488 B1**
(45) Veröffentlichungstag und Bekanntmachung des Hinweises auf die Patenterteilung: **19.03.2025**
(21) Anmeldenummer: 23204764.7
(22) Anmeldetag: 20.10.2023
(51) Int. Cl.: F16L 41/00, F16J 15/06

(54) **PROZESSANSCHLUSS, SENSORBAUGRUPPE UND PROZESSANLAGE**
PROCESS CONNECTION, SENSOR ASSEMBLY AND PROCESS INSTALLATION
RACCORD DE PROCESSUS, MODULE DE CAPTEUR ET INSTALLATION DE PROCESSUS

(30) Priorität: 27.10.2022 DE 102022128514
(43) Veröffentlichungstag der Anmeldung: 01.05.2024
(73) Patentinhaber: SICK AG, 79183 Waldkirch (DE)
(72) Erfinder: Scholder, Jochen, 79183 Waldkirch (DE); Schätzle, Sebastian, 79183 Waldkirch (DE)
(74) Vertreter: Manitz Finsterwald Patent- und Rechtsanwaltspartnerschaft mbB

(56) Entgegenhaltungen:
- EP-A1- 3 783 248
- WO-A1-2018/099666
- DE-A1- 102016 008 419
- DE-A1- 102017 128 291
- DE-A1- 19 941 188
- US-A1- 2021 190 620

## Beschreibung

Die vorliegende Erfindung betrifft einen Prozessanschluss, insbesondere für eine Sensoreinheit in einer Prozessanlage, eine Sensorbaugruppe mit einem solchen Prozessanschluss sowie eine Prozessanlage mit wenigstens einer entsprechenden Sensorbaugruppe und/oder wenigstens einem entsprechenden Prozessanschluss. Vergleichbare Ausgestaltungen sind beispielsweise der EP 3 783 248 A1, der US 2021/190620 A1, der DE 10 2016 008419 A1, der DE 199 41 188 A1 sowie der WO 2018/099666 A1 zu entnehmen.

Solche Prozessanschlüsse dienen im Allgemeinen dazu, bestimmte Einheiten, wie beispielsweise Sensoreinheiten und/oder Steuereinheiten, an Prozessanlagen anzuschließen. Insbesondere sind solche Prozessanschlüsse dafür vorgesehen, Messsonden entsprechender Sensoreinheiten durch Öffnungen in Leitungen in das weitestgehend geschlossene System der Prozessanlage einzubringen.

Hierbei ist es stets notwendig, den Prozessanschluss derart auszubilden, dass im montierten Zustand keine Leckage an dem entsprechenden Prozessanschluss und insbesondere zwischen der Messsonde und dem Prozessanschluss, auftritt. Insbesondere im Bereich der Lebensmittelindustrie ist dabei die sogenannte Bakteriendichtigkeit zu erfüllen. Als "bakteriendicht" wird ein System mit einer Leckrate in der Größenordnung von 10⁻⁴ mbar*l/s betrachtet.

Es ist daher die der Erfindung zugrundeliegende Aufgabe, einen Prozessanschluss bereitzustellen, mit welchem auf eine robuste und zuverlässige Art und Weise das bakteriendichte Einbringen einer Messsonde einer Sensoreinheit in eine entsprechende Prozessanlage möglich ist.

Diese Aufgabe wird durch einen Prozessanschluss gemäß Anspruch 1 gelöst. Vorteilhafte Weiterbildungen für einen solchen sind den abhängigen Ansprüchen zu entnehmen. Ferner betrifft die vorliegende Erfindung entsprechend den beiden nebengeordneten Ansprüchen auch eine Sensorbaugruppe mit einem solchen Prozessanschluss sowie eine Prozessanlage mit wenigstens einer solchen Sensorbaugruppe und/oder wenigstens einem solchen Prozessanschluss.

Gemäß der vorliegenden Erfindung umfasst ein Prozessanschluss, insbesondere für eine Sensoreinheit in einer Prozessanlage, einen äußeren Gewindeadapter mit einem Einschraubkanal, welcher mit einem Innengewinde versehen ist, einen inneren Gewindeadapter mit einem zylindrischen Durchgangskanal und einem Außengewinde, sowie eine ringförmige Formdichtung. Der äußere Gewindeadapter weist an einem Ende des Einschraubkanals einen radial umlaufenden nach Innen hervorstehenden hohlzylindrischen Vorsprung auf. Die ringförmige Formdichtung liegt innerhalb des Einschraubkanals des äußeren Gewindeadapters in axialer und in radialer Richtung an dem besagten hohlzylindrischen Vorsprung an. Das Außengewinde des inneren Gewindeadapters steht mit dem Innengewinde des äußeren Gewindeadapters in Schraubeingriff. Der innere Gewindeadapter ist dazu ausgebildet, die Formdichtung in der axialen Richtung auf eine im Wesentlichen senkrecht zur axialen Richtung ausgerichtete Deckfläche des hohlzylindrischen Vorsprungs des äußeren Gewindeadapters zu pressen. Erfindungsgemäß weist der Prozessanschluss einen Distanzring auf, welcher im Inneren des äußeren Gewindeadapters die Formdichtung radial umgibt und ebenfalls auf dem hohlzylindrischen Vorsprung aufliegt. Der Distanzring ist erfindungsgemäß dazu ausgebildet, eine radiale Verformung der Formdichtung beim Verpressen durch den inneren Gewindeadapter und/oder den Grad der maximalen axialen Verpressung der Formdichtung durch den inneren Gewindeadapter zu beschränken.

Dabei soll der Begriff "hohlzylindrisch" nicht ausschließen, dass der Vorsprung zwischen einer seiner Deckflächen und seinem Innenumfang eine Abrundung, Abschrägung oder Stufe aufweist. Auch soll nicht zwangsläufig ausgeschlossen sein, dass der Innenumfang kleinere Ausnehmungen und/oder Vorsprünge aufweist. Dabei sind auch Ausgestaltungen möglich, in welchen eine axiale Länge des hohlzylindrischen Vorsprungs größer-gleich seinem Innendurchmesser ist. Bevorzugt ist jedoch ein hohlzylindrischer Vorsprung mit einer axialen Länge, welche kleiner als sein Innendurchmesser ist und insbesondere scheibenförmige Ausgestaltungen für den hohlzylindrischen Vorsprung. Wichtig ist dabei, dass der hohlzylindrische Vorsprung im Wesentlichen senkrecht bzw. gerade entlang der Längsachse des Einschraubkanals und des Durchgangskanals, welche konzentrisch zueinander ausgerichtet sind, verläuft. Insbesondere weist die Öffnung des hohlzylindrischen Vorsprungs einen Querschnitt auf, welcher im Wesentlichen einem Querschnitt der einzubringenden Messsonde entspricht. Beispielsweise sind beide Querschnitte kreisförmig, es sind jedoch auch andere Ausgestaltungen, beispielsweise mit ovalen, quadratischen oder anderweitig polygonalen Querschnitten möglich. Der Begriff "ringförmig" ist bevorzugt als kreisringförmig zu verstehen, umfasst jedoch auch andere Ausgestaltungen wir ovale oder polygonale Formen. Die axiale Richtung und die radiale Richtung beziehen sich vorliegend auf die Längsachse des Prozessanschlusses, welche gleichzeitig auch der Längsachse des Durchgangskanals und des Einschraubkanals entspricht. Dabei kann der gesamte Prozessanschluss, oder können zumindest einzelne Komponenten dessen, weitestgehend rotationssymmetrisch um die besagte Längsachse herum ausgebildet sein.

Die vorgesehene ringförmige Formdichtung wird im montierten Zustand des Prozessanschlusses mit eingesetzter Sensoreinheit durch den inneren Gewindeadapter lediglich axial und im Wesentlichen verspannungsfrei gegen den hohlzylindrischen Vorsprung gepresst. Die einzuführende Messsonde presst schließlich die Formdichtung im Wesentlichen radial gegen den Innenumfang des hohlzylindrischen Vorsprungs. Dabei sind die jeweiligen Kontaktflächen an dem hohlzylindrischen Vorsprung, auf welche die Formdichtung gepresst wird eindeutig voneinander getrennt (insbesondere durch eine Oberkante des hohlzylindrischen Vorsprungs). Dies ermöglicht einen besonders robusten und dichten Abschluss zwischen dem äußeren Gewindeadapter und der Messsonde im Bereich des hohlzylindrischen Vorsprungs.

Um die Zentrierung des inneren Gewindeadapters und damit Messsonde in dem Prozessanschluss und damit die Dichtwirkung der Formdichtung zu optimieren, umfasst der innere Gewindeadapter bevorzugt unterhalb dessen Außengewinde (d.h. axial in Richtung der Formdichtung) einen axial hervorstehenden zylindrischen Ansatz bzw. Fortsatz, der von einer passgenauen Bohrung im äußeren Gewindeadapter aufgenommen ist. Der zylindrische Ansatz kann bevorzugt vollständig umlaufend an der Bohrung im äußeren Gewindeadapter anliegen. Insbesondere können zylindrischer Ansatz und äußerer Gewindeadapter einen maximalen Abstand in radialer Richtung (d.h. eine Passgenauigkeit) von weniger als 0,1mm oder weniger als 0,05mm aufweisen. Die Bohrung ist bevorzugt konzentrisch mit der zentralen Längsachse des Prozessanschlusses gefertigt. Der Durchgangskanal im inneren Gewindeadapter ist wiederum konzentrisch zum zylindrischen Ansatz bzw. Fortsatz.

Somit ist die Messsonde zur Formdichtung konzentrisch zentriert. Der passgenaue Sitz der Messsonde zum Durchgangskanal im inneren Gewindeadapter verhindert, dass die Messsonde durch wirkende Kräfte (z.B. durch Staudruck bei Durchflussmessungen) exzentrisch zur Formdichtung verschoben wird. Die Konsequenz eine solchen Verschieben wäre nämlich eine zu vermeidende ungleichmäßige Verpressung der Formdichtung.

Erfindungsgemäß, wie oben schon ausgeführt, weist der Prozessanschluss einen Distanzring auf, welcher im Inneren des äußeren Gewindeadapters die Formdichtung radial umgibt und ebenfalls auf dem hohlzylindrischen Vorsprung aufliegt. Der Distanzring ist dazu ausgebildet, eine radiale Verformung der Formdichtung beim Verpressen durch den inneren Gewindeadapter und/oder den Grad der maximalen axialen Verpressung der Formdichtung durch den inneren Gewindeadapter zu beschränken.

Durch diese Ausgestaltung wird eine maximale Verformung der Formdichtung beschränkt, was einerseits eine bessere Abdichtung erlaubt und andererseits zu einer erhöhten Langlebigkeit und Zuverlässigkeit der Formdichtung führt.

Dabei kann der besagte Distanzring als axial hervorstehender Vorsprung des inneren Gewindeadapters ausgebildet sein.

Eine solche Ausgestaltung kommt mit wenigen Einzelbauteilen aus und ist damit benutzerfreundlicher bei der Montage und der Wartung.

Alternativ dazu kann der besagte Distanzring als von dem inneren Gewindeadapter separate Komponente, insbesondere in Gestalt eines Kreisrings, welcher die Formdichtung in der radialen Richtung umschließt, ausgebildet sein.

Damit kann der Distanzring als Nachrüstbauteil vorgesehen werden und noch flexibler auf die jeweilige Verwendung angepasst werden. Insbesondere kann der Distanzring aus einem Material gefertigt sein, welches sich von dem Material des inneren Gewindeadapters unterscheidet.

Bevorzugt weist der Prozessanschluss eine Druckscheibe auf, welche zwischen dem inneren Gewindeadapter und der Formdichtung vorgesehen ist.

Die besagte Druckschreibe wirkt als separater Kraftvermittler zwischen dem inneren Gewindeadapter und der Formdichtung und kann insbesondere aus einem Material gefertigt sein, welches chemisch mit der Formdichtung verträglicher ist, als das Material des inneren Gewindeadapters. Insbesondere ist dabei ein zuvor beschriebener Distanzring einstückig mit der Druckscheibe ausgebildet.

Ferner bevorzugt sind der innere Gewindeadapter, die Formdichtung und die Druckscheibe derart gebildet, dass die Reibung zwischen der Formdichtung und der Druckscheibe größer als die Reibung zwischen dem inneren Gewindeadapter und der Druckscheibe ist. Insbesondere ist die Kontaktfläche zwischen dem inneren Gewindeadapter und der Druckscheibe als Gleitlager ausgebildet. Die einstückige Ausbildung von Distanzring und Druckscheibe führt zu einer Ausgestaltung mit weniger Einzelbauteilen (gegenüber der separaten Ausbildung dieser beiden Komponenten) und ermöglicht damit eine benutzerfreundlichere Montage und Wartung.

Diese Ausgestaltung ermöglicht es, zu vermeiden, dass die Formdichtung radial umlaufend verspannt wird, wenn sie durch den inneren Gewindeadapter mittels einer Schraubbewegung auf den hohlzylindrischen Vorsprung gepresst wird. Mit anderen Worten, diese Ausgestaltung dient dazu, eine Reibung zwischen dem inneren Gewindeadapter und der Formdichtung weitestgehend zu reduzieren, sodass der innere Gewindeadapter im Wesentlichen lediglich axiale Kräfte auf die Formdichtung ausübt. Dies erhöht die Lebensdauer der verspannten Formdichtung und die Dichtigkeit des Prozessanschlusses im montierten Zustand.

Bevorzugt weist der innere Gewindeadapter, oder falls vorgesehen die Druckscheibe, entlang seines inneren Umfangs einen axial hervorstehenden Fixierkragen auf, welcher in die Formdichtung hineingreift.

Diese Ausgestaltung erlaubt durch eine weitere Beschränkung des Raums für die Formdichtung eine weitere Erhöhung der Dichtigkeit des Prozessanschlusses im montierten Zustand, wobei der Fixierkragen gleichzeitig eine zentrierte bzw. mittige Positionierung der Formdichtung sicherstellt.

Bevorzugt ist die Differenz der Höhe des Distanzrings von der Kragenhöhe des besagten Fixierkragens kleiner-gleich 0,1 mm. Insbesondere ist die Kragenhöhe des Fixierkragens gleich der Höhe des Distanzrings oder bis zu 5 % oder bis zu 10 % oder bis zu 15% (z.B. 0,1 mm) größer als die Höhe des Distanzrings.

In Tests hat sich dieses Größenverhältnis aus Kragenhöhe des Fixierkragens und Höhe des Distanzrings als besonders bevorzugt erwiesen, um besonders robuste und dichte Prozessanschlüsse zu erhalten.

Bevorzugt weist die Formdichtung einen ringförmigen Hauptkörper mit einem Innendurchmesser, der kleiner als der Innendurchmesse des hohlzylindrischen Vorsprungs ist, und einem Außendurchmesser, der größer als der Innenddurchmesser des hohlzylindrischen Vorsprungs ist, auf. Der Hauptkörper weist im entspannten Zustand der Formdichtung insbesondere einen rechteckigen, quadratischen, ovalen oder runden Querschnitt auf.

Der besagte Hauptkörper ist durch die genannten Merkmale auf einfache Weise dazu ausgebildet, auf dem hohlzylindrischen Vorsprung im Inneren des äußeren Gewindeadapters aufzuliegen. Ferner ist insbesondere ein rechteckiger oder quadratischer Hauptkörper besonders gut zwischen dem hohlzylindrischen Vorsprung des äußeren Gewindeadapters und dem inneren Gewindeadapter verpressbar.

Ferner bevorzugt weist der Fixierkragen einen Außendurchmesser auf, welcher kleiner-gleich dem Innendurchmesser des Hauptkörpers der Formdichtung ist.

Dadurch wird verhindert, dass der Fixierkragen in axialer Richtung auf den Hauptkörper der Formdichtung Druck ausübt und damit zu einer unerwünschten Verspannung der Formdichtung führt.

Ferner bevorzugt sind der Hauptkörper der Formdichtung und der Distanzring derart bemessen, dass die maximale axiale Verformung des Hauptkörpers der Formdichtung (also sein Klemmmaß) beim Verpressen durch den inneren Gewindeadapter auf 0,2mm bis 0,9mm beschränkt ist.

Dieser Größenbereich für das Klemmmaß hat sich als besonders geeignet zur zuverlässigen und insbesondere bakteriendichten (Leckrate in der Größenordnung von 10⁻⁴ mbar*I/s) Abdichtung herausgestellt.

Ferner bevorzugt weist die Formdichtung ferner einen, insbesondere radial umlaufenden und bevorzugt schwalbenschwanzförmigen, Dichtungskragen auf, welcher in die Öffnung im Inneren des hohlzylindrischen Vorsprungs hineinragt. Dieser Dichtungskragen weist im entspannten Zustand der Formdichtung zumindest abschnittsweise eine Breite auf, welche größer als die Differenz zwischen dem Innendurchmesser des hohlzylindrischen Vorsprungs und dem Außendurchmesser einer durch den Prozessanschluss zu führenden Messsonde einer entsprechenden Sensoreinheit ist.

Dies ermöglicht eine strukturell vergleichsweise einfache und robuste sowie sehr zuverlässig abdichtende Ausbildung eines Bereichs des Formdichtung, welcher durch die Messsonde radial an eine Innenwand des hohlzylindrischen Vorsprungs des äußeren Gewindeadapters gepresst wird. Insbesondere ist der Hauptkörper der Formdichtung im Querschnitt rechteckig mit abgerundeten Ecken. Die innere untere Ecke des Hauptkörpers geht in den Dichtungskragen über. Der Dichtungskragen selbst wird in axialer Richtung nach unten breiter, schließt dann aber gerade und parallel zu Normalen auf axialer Richtung ab. Eine derartige Ausgestaltung hat sich in Versuchen als besonders robust und dennoch dicht bewiesen.

Bevorzugt ist der Durchmesser des Durchgangskanals des inneren Gewindeadapters, und falls vorgesehen der Innendurchmesser der Druckscheibe und/oder des Fixierkragens, gleich einem Außendurchmesser einer durch den Prozessanschluss zu führenden Messsonde einer entsprechenden Sensoreinheit.

Dadurch wird ein Spiel der einzelnen Komponenten des Prozessanschlusses gegenüber der Messsonde weitestgehend reduziert, was in einer robusten und zuverlässigen Gesamtausgestaltung resultiert.

Bevorzugt ist der Durchmesser des Außengewindes des inneren Gewindeadapters bzw. der Durchmesser des Innengewindes des äußeren Gewindeadapters gleich dem Durchmesser des Außengewindes des Einschraubabschnitts einer Einschraubverbindung einer mit dem Prozessanschluss zu koppelnden Sensoreinheit. Insbesondere ist der Außendurchmesser des Distanzrings und/oder der Außendurchmesser der Druckscheibe, sofern vorhanden, kleiner-gleich dem oben genannten Durchmesser.

Mit anderen Worten, im montierten Zustand steht ein einziges Innengewinde des äußeren Gewindeadapters sowohl mit dem Außengewinde des inneren Gewindeadapters als auch mit dem Außengewinde des Einschraubabschnitts der Einschraubverbindung der Sensoreinheit im Gewindeeingriff. Dabei sind insbesondere der Distanzring und die Druckscheibe jeweils entlang des Einschraubkanals in Ihre Einbauposition im Bereich des hohlzylindrischen Vorsprungs beweglich. Diese Ausgestaltung ermöglicht eine besonders einfach herzustellende und zu montierende Gesamtausgestaltung, welche auch noch besonders robust ist.

Bevorzugt weist der innere Gewindeadapter eine in seinem Inneren umlaufende Nut auf, in welcher ein Zentrierring, insbesondere in Gestalt eines O-Rings, vorgesehen ist. Der besagte Zentrierring weist einen Innendurchmesser, welcher kleiner als der Außendurchmesser eine entsprechenden Messsonde ist, und einen Außendurchmesser, welcher größer als der Durchmesser des Durchgangskanals des inneren Gewindeadapters ist, auf.

Dieser Zentrierring ermöglich eine noch bessere zentrierte Führung der Messsonde durch den Durchgangskanal des inneren Gewindeadapters und resultiert dabei in einem weiteren Leckageschutz zwischen der Messsonde und dem Prozessanschluss.

Bevorzugt weist der Einschraubkanal des äußeren Gewindeadapters eine radial umlaufende Auffangnut auf, welche axial zwischen dem Innengewinde des äußeren Gewindeadapters und dem hohlzylindrischen Vorsprung vorgesehen ist und radial über das Innengewinde des äußeren Gewindeadapters hinausragt. Der äußere Gewindeadapter weist ferner insbesondere einen sich radial erstreckenden Ablaufkanal auf, welcher mit der Auffangnut verbunden ist.

Die Auffangnut dient als Auffangbereich für Mittel, welches an der Formdichtung vorbeigeleckt ist und damit als Puffer, um beispielsweise eine lediglich bei Erstinbetriebnahme der Prozessanlage auftretende "Initialisierungsleckage" aufzufangen. Durch den bevorzugt ferner vorgesehenen Ablaufkanal kann das jeweilige Mittel aus der Auffangnut abgeführt und bei Bedarf einem Leckagesensor zugeführt werden, um die Auffangnut nach einer entsprechenden Leckage zu leeren und dabei die auftretende Leckage überwachen zu können.

Erfindungsgemäß umfasst eine Sensorbaugruppe für eine Prozessanlage eine Sensoreinheit mit einer Einschraubverbindung und einer durch die Einschraubverbindung geführten Messsonde mit einem Messkopf. Ferner umfasst die erfindungsgemäße Sensorbaugruppe einen der zuvor beschriebenen Prozessanschlüsse. Die Einschraubverbindung weist einen Einschraubabschnitt mit einem Außengewinde auf. Die Einschraubverbindung ist mit dem Außengewinde des Einschraubabschnitts derart von demjenigen Ende, welches dem hohlzylindrischen Vorsprung des äußeren Gewindeadapters gegenüberliegt, in den Einschraubkanal des Prozessanschlusses eingeschraubt, dass der Messkopf der Messsonde durch den hohlzylindrischen Vorsprung aus dem Prozessanschluss herausragt oder zumindest mit diesem abschließt.

Eine solche Sensorbaugruppe ist besonders effizient und dicht abschließend in eine entsprechende Prozessanlage einbindbar.

Erfindungsgemäße umfasst eine Prozessanlage wenigstens eine zuvor beschriebene Sensoreinheit und/oder wenigstens einen zuvor beschriebenen Prozessanschluss.

Eine solche Prozessanlage profitiert von den zuvor beschriebenen Vorteilen der erfindungsgemäßen Sensorbaugruppe und/oder Prozessanschlüssen.

Nachfolgend wird die Erfindung beispielhaft unter Bezugnahme auf die beiliegenden Zeichnungen beschrieben. Hierbei zeigt:
- FIG. 1: eine Sensorbaugruppe mit einem Prozessanschluss gemäß einer ersten Ausführungsform der vorliegenden Erfindung, einmal in der Seitenansicht (links) und einmal im Querschnitt (rechts);
- FIG. 2: eine Sensorbaugruppe mit einem Prozessanschluss gemäß einer zweiten Ausführungsform der vorliegenden Erfindung, einmal in der Seitenansicht (links) und einmal im Querschnitt (rechts);
- FIG. 3: eine Sensorbaugruppe entsprechend einer der Figuren 1 und 2 mit einer zusätzlich vorgesehenen Steuer- und/oder Auswerteinheit an der Messsonde;
- FIG. 4: eine Detailansicht des Querschnitts der Sensorbaugruppe aus FIG. 1 im Bereich des inneren Gewindeadapters; und
- FIG. 5: eine Detailansicht eines Querschnitts einer entsprechenden Sensorbaugruppe mit einer alternativen erfindungsgemäßen Ausgestaltung des Prozessanschlusses.

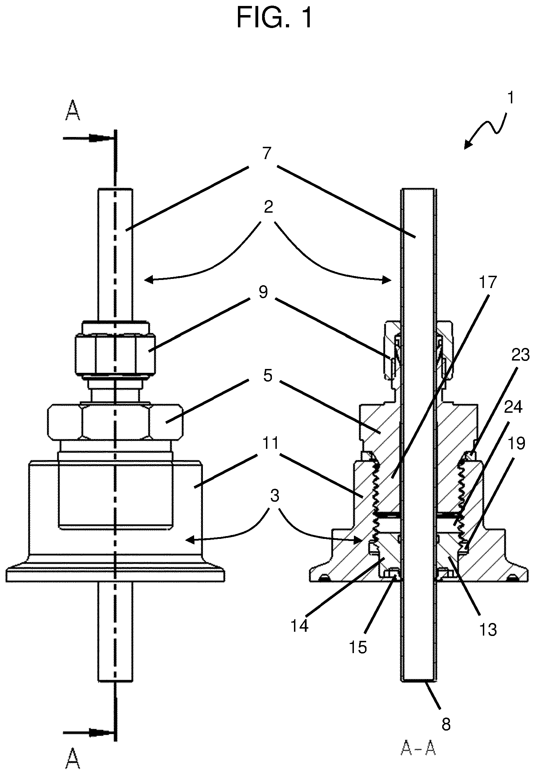

Fig. 1 zeigt eine erste Ausführungsform einer Sensorbaugruppe 1 mit einer Sensoreinheit 2 und einem beispielhaften Prozessanschluss 3 gemäß der vorliegenden Erfindung, sowohl in der Seitenansicht (links) als auch im Querschnitt (rechts).

Wie hier zu sehen ist, umfasst die Sensoreinheit 2 eine Einschraubverbindung 5 sowie eine durch diese geführte Messsonde 7. Die Messsonde 7 ist über geeignete Fixierungsmittel 9 in der Einschraubverbindung 5 fixiert. Die Messsonde 7 umfasst einen Messkopf 8, welcher in der gezeigten Ausgestaltung unten aus dem Prozessanschluss 3 herausragt. Alternativ dazu kann der Messkopf 8 auch lediglich mit dem Prozessanschluss 3 abschließen.

Der Prozessanschluss 3 umfasst einen äußeren Gewindeadapter 11, einen inneren Gewindeadapter 13 sowie eine Formdichtung 15. Der äußere Gewindeadapter 11 umgibt einen Einschraubkanal, welcher mit einem Innengewinde versehen ist. Die Einschraubverbindung 5 umfasst einen Einschraubabschnitt 17 mit einem Außengewinde, welches mit dem Innengewinde des äußeren Gewindeadapters in Eingriff steht. Auch der innere Gewindeadapter 13 weist ein Außengewinde auf, welches mit dem Innengewinde des äußeren Gewindeadapters 11 in Eingriff steht. Sowohl die Einschraubverbindung 5 als auch der innere Gewindeadapter 11 sind mit einem Durchgangskanal versehen, durch welchen im eingebauten Zustand die Messsonde 7 verläuft.

Um die Zentrierung des inneren Gewindeadapters 13 und damit Messsonde 7 in dem Prozessanschluss 3 und damit die Dichtwirkung der Formdichtung 15 zu optimieren, umfasst der innere Gewindeadapter 13 unterhalb dessen Außengewinde einen axial hervorstehenden zylindrischen Ansatz bzw. Fortsatz 14, der von einer passgenauen Bohrung im äußeren Gewindeadapter 11 aufgenommen ist. Diese Bohrung ist konzentrisch mit der zentralen Längsachse des Prozessanschlusses 3 gefertigt. Der Durchgangskanal im inneren Gewindeadapter 13 ist wiederum konzentrisch zum zylindrischen Ansatz bzw. Fortsatz 14. Somit ist die Messsonde 7 zur Formdichtung 15 konzentrisch zentriert. Der passgenaue Sitz der Messsonde 7 zum Durchgangskanal im inneren Gewindeadapter 13 verhindert, dass die Messsonde 7 durch wirkende Kräfte (z.B. durch Staudruck bei Durchflussmessungen) exzentrisch zur Formdichtung 15 verschoben wird. Die Konsequenz einer solchen Verschiebung wäre nämlich eine zu vermeidende ungleichmäßige Verpressung der Formdichtung 15.

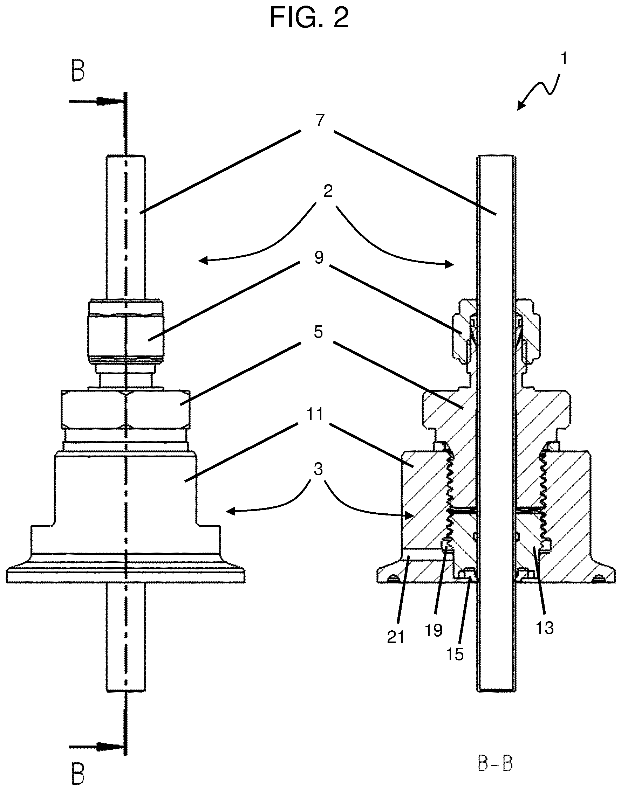

Wie in der Querschnittansicht (also rechts in FIG. 1) zu sehen ist, umfasst der äußere Gewindeadapter 11 zwischen dem Bereich, in welchem die Formdichtung 15 vorgesehen ist und seinem Innengewinde eine radial umlaufende Auffangnut 19. Diese dient zum Auffangen und zumindest vorübergehenden Lagern von durch die Formdichtung 15 gelecktem Mittel aus der Prozessanlage. Wie in Fig. 2 gezeigt ist, kann diese Auffangnut 19 mit einem Ablaufkanal 21 verbunden sein. Dieser dient dazu, das Mittel aus der Auffangnut 19 abzulassen und ggf. einem separaten Leckagesensor (nicht gezeigt) zuzuführen.

Wie in den Figuren 1 und 2 gezeigt ist, kann zwischen der Einschraubverbindung 5 und dem äußeren Gewindeadapter 11 ein Kontaktring 23, insbesondere in Gestalt eines weiteren Dichtrings, vorgesehen sein.

Neben der Vorsehung des Ablaufkanals 21 in der Ausgestaltung aus FIG. 2 besteht der einzige weitere wesentliche Unterschied zwischen den Ausgestaltungen der Figuren 1 und 2 darin, dass der innere Gewindeadapter 13 in FIG. 1 kürzer als der innere Gewindeadapter 13 in FIG. 2 ist. Dies führt dazu, dass in der Ausgestaltung aus FIG. 1 ein weiterer Auffangbereich 24 für durch die Formdichtung 15 gelecktes Mittel gebildet wird. Dies macht hier vor allem wegen dem fehlenden Ablaufkanal 21 Sinn, um die Kapazität für die Aufnahme von durch die Formdichtung 15 gelecktes Mittel zu erhöhen.

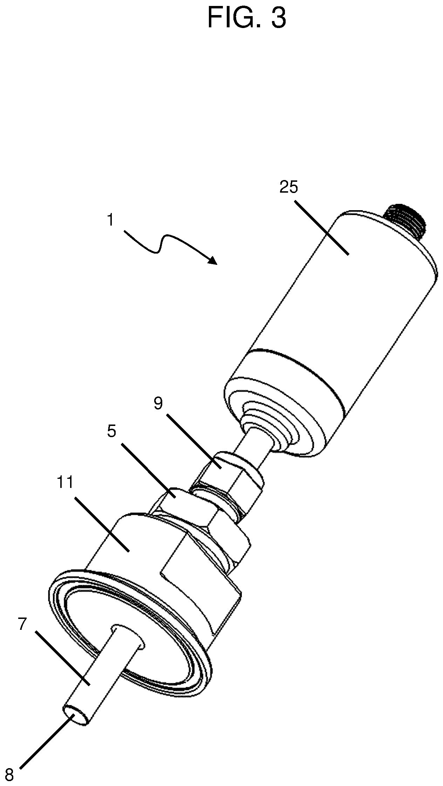

Wie weiterführend in FIG. 3 gezeigt ist, kann die Sensoreinheit 1 auch eine Steuer- und/oder Auswerteinheit 25 an der jeweiligen Messsonde 7 umfassen. Geeignete Mittel hierfür sind wohlbekannt und werden hier folglich nicht im Detail besprochen.

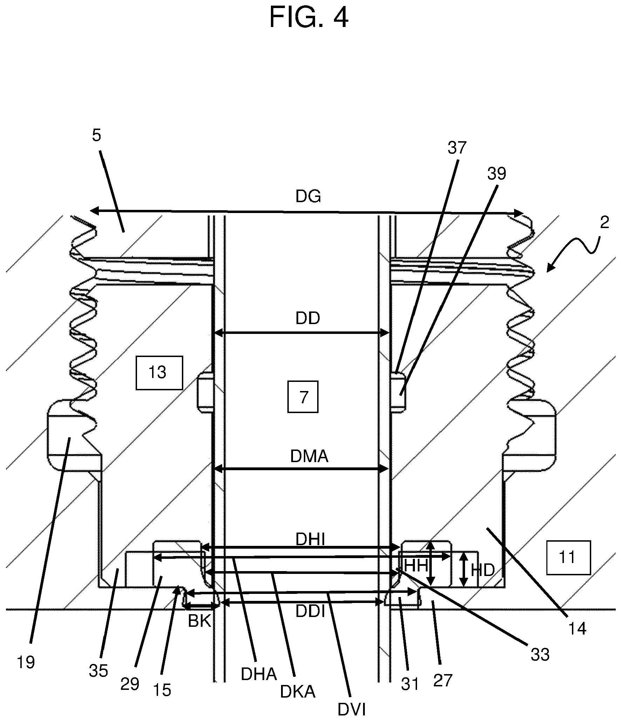

Im Folgenden wird unter Bezugnahme auf FIG. 4 die in FIG. 1 gezeigte Sensorbaugruppe 1 im Bereich des inneren Gewindeadapter 13 im Detail beschrieben.

Der äußere Gewindeadapter 11 umfasst an seinem unteren Ende einen nach innen gerichteten radial umlaufenden hohlzylindrischen Vorsprung 27. Auf diesem sitzt ein im Querschnitt quadratischer Hauptkörper 29 der Formdichtung 15. Die Formdichtung 15 selbst ist dabei ringförmig, insbesondere kreisringförmig, ausgebildet. Neben dem Hauptkörper 29 umfasst die Formdichtung 15 einen radial umlaufenden und im Querschnitt schwalbenschwanzförmigen Dichtungskragen 31, welcher in den hohlzylindrischen Vorsprung 27 hineingreift.

Die Formdichtung 15 wird durch einen Fixierkragen 33, welcher vorliegend als Bestandteil des inneren Gewindeadapters 13 ausgebildet ist, bezüglich des hohlzylindrischen Vorsprungs 27 und damit bezüglich der Längsachse des Prozessanschlusses 3 zentriert. Neben dem Fixierkragen 33 ist hier der innere Gewindeadapter 13 ferner mit einem Distanzring 35 in Gestalt eines axial hervorstehenden Vorsprungs ausgebildet, um eine Verformbarkeit der Formdichtung 15 räumlich zu beschränken.

Ferner weist der innere Gewindeadapter 13 eine radial umlaufende Nut 37 auf, in welcher ein Zentrierring 39, insbesondere in Gestalt eines O-Rings, vorgesehen ist.

Im Folgenden wird genauer auf die jeweiligen Größenbeziehungen in dem gezeigten Ausführungsbeispiel eingegangen.

Das Innengewinde des äußeren Gewindeadapters 11, das Außengewinde des inneren Gewindeadapters 13 sowie das Außengewinde des Einschraubabschnitts 17 der Einschraubverbindung 5 haben den selben Gewindedurchmesser DG. Damit muss in dem äußeren Gewindeadapter 11 lediglich ein Innengewinde mit dem konstanten Gewindedurchmesser DG gebildet werden, um sowohl den inneren Gewindeadapter 13 als auch die Einschraubverbindung 5 in diesem zu fixieren.

In FIG. 4 ist die Formdichtung 15 in ihrer entspannten Form dargestellt, während der innere Gewindeadapter 13 in seiner die Formdichtung 15 verpressenden Position dargestellt ist, um die eigentliche Ausgestaltung der Formdichtung 15 und gleichzeitig das Verpressungsmaß anschaulich darzustellen.

Wie bereits oben erklärt, umfasst die Formdichtung 15 den Hauptkörper 29 und den Dichtungskragen 31. Der Hauptkörper 29 liegt in axialer Richtung an dem hohlzylindrischen Vorsprung 27 an bzw. auf. Dafür hat der Hauptkörper 29 einen Innendurchmesser DHI, welcher kleiner als der Innendurchmesser DVI des hohlzylindrischen Vorsprungs 27 ist, und einen Außendurchmesser DHA, welcher größer als der Innendurchmesser DVI des hohlzylindrischen Vorsprungs 27 ist. Zur Halterung der Formdichtung 15 hat der Fixierkragen 33 einen Außendurchmesser DKA welcher kleiner-gleich dem Innendurchmesser DHI des Hauptkörpers 29 der Formdichtung 15 ist. Zur Optimierung der Dichtigkeit sind der Hauptkörper 29 der Formdichtung 15 und der Distanzring 35 derart bemessen, dass eine maximale axiale Verformung, also ein Klemmmaß, des Hauptkörpers 29 der Formdichtung 15 auf 0,2 mm bis 0,9 mm beschränkt ist. Dies kann beispielsweise dadurch erreicht werden, dass der Distanzring 35 eine Höhe HD aufweist, welche um 0,2 mm bis 0,9 mm kleiner als die Höhe HH des Hauptkörpers 29 der Formdichtung 15 ist. Ferner ist bevorzugt die Differenz der Höhe HD des Distanzrings 35 von der Kragenhöhe HK des vorgesehenen Fixierkragens 33 kleiner-gleich 0,1 mm. Insbesondere ist die Kragenhöhe HK des Fixierkragens 33 gleich der Höhe HD des Distanzrings 35 oder bis zu 0,1 mm größer als die Höhe HD des Distanzrings 35.

Der Außendurchmesser DHA des Hauptkörpers 29 der Formdichtung 15 ist dabei kleiner als der Innendurchmesser DDI des Distanzring 35, um dem Hauptkörper 29 der Formdichtung 15 ausreichen Raum zur Verformung während des Verspressvorgangs durch den inneren Gewindeadapter 13 zu geben.

Wie ferner der FIG. 4 zu entnehmen ist, weist der Dichtungskragen 31 der Formdichtung 15 eine Breite BK auf, welche größer als die Different zwischen dem Innendurchmesser DVI des hohlzylindrischen Vorsprungs 27 und dem Außendurchmesser DMA der Messsonde 7 ist. Damit wird der Dichtungskragen 31 der Formdichtung 15 durch die Messsonde 7 zuverlässig und fest in radialer Richtung an den Innenumfang DVI des hohlzylindrischen Vorsprung 27 gepresst.

Um die Messsonde 7 bei einem möglichst geringem Spaltmaß durch den Prozessanschluss 3 führen zu können, haben der Durchgangskanal durch den inneren Gewindeadapter 13, der Durchgangskanal durch die Einschraubverbindung 5 und der Fixierkragen 33 einen Durchgangskanaldurchmesser DD, welcher dem Außendurchmesser DMA der Messsonde 7 entspricht.

Um im zusammengesetzten Zustand des Sensorbaugruppe 1 zuverlässig zwischen der Messsonde 7 und dem inneren Gewindeadapter 13 eingespannt zu werden, weist der Zentrierring 39 im entspannten Zustand einen Innendurchmesser auf, welcher kleiner als der Außendurchmesser DMA der Messsonde 7 ist, und einen Außendurchmesser auf, welcher größer als der Durchgangskanaldurchmesser DD ist.

Im Folgenden wird eine beispielhafte Montage einer solchen Sensorbaugruppe beschrieben.

Zuerst wird entschieden, welche Sensoreinheit 2 an einer vorgesehenen Öffnung einer Prozessanlage montiert werden soll. Anschließend wird ein entsprechender Prozessanschluss 3, und insbesondere ein entsprechender äußerer Gewindeadapter 11, ausgewählt und in bekannter Weise weitestmöglich leckagedicht, insbesondere mittels Bolzen und/oder Schrauben und ggf. einer Dichtung oder einer Schweißnaht, an einer entsprechenden Öffnung der Prozessanlage (nicht gezeigt) montiert. Anschließend wird die Formdichtung 15 in den äußeren Gewindeadapter 11 und in den hohlzylindrischen Vorsprung 27 eingesetzt. Danach wird der innere Gewindeadapter 13 mit dem bereits vormontierten Zentrierring 39 in den äußeren Gewindeadapter 11 eingeschraubt, bis der Distanzring 35 auf dem hohlzylindrischen Vorsprung 27 aufliegt. Dies führt zu einer ersten axialen Verspressung der Formdichtung 15. Alternativ kann der Prozessanschluss 2 bereits vor der Montage an der Prozessanlage vormontiert und insbesondere auch vorgespannt sein bzw. werden.

Zu guter Letzt wird die Messsonde 7 der Sensoreinheit 2 durch den Durchgangskanal des inneren Gewindeadapters 13 in den Prozessanschluss 3 eingesetzt und mittels der Einschraubverbindung 5 in diesem festgezogen. Die Messsonde 7 presst schließlich den Dichtungskragen 31 der Formdichtung 15 in der radialen Richtung gegen den hohlzylindrischen Vorsprung 27. Dadurch erfolgt ein besonders dichter Abschluss zwischen der Messsonde 7 und dem Prozessanschluss 3. Dabei sind die Durchgangskanäle der Formdichtung 15 und des inneren Gewindeadapters 13 in Dimension und Form auf die jeweilige Messsonde 7 abgestimmt, um die Dichtigkeit des Abschlusses zu optimieren.

Durch das mehrschrittige Verpressen der Formdichtung 15, also zuerst axial, dann radial, ist beispielsweise bei Prozessdrücken von bis zu 16bar und Prozesstemperaturen zwischen 10°C und 110°C ein bakteriendichter Abschluss möglich. Bei Prozessdrücken unterhalb von 1bar ist ein bakteriendichter Abschluss sogar z.B. bei Prozesstemperaturen von bis zu 150°C möglich. Beispielsweise bei einem Prozessdruck von 0,3bar und einer Prozesstemperatur von 25°C wurde sogar ein benzin- und öldichter Abschluss (Leckrate im Bereich von 10⁻⁵ mbar*l/s) über einen Zeitraum von zumindest 15 Minuten hinweg nachgewiesen. Die genannten Prozessdrücke sind vorliegend nicht als Realdrücke sondern als Überdrücke gegenüber dem Normaldruck zu verstehen.

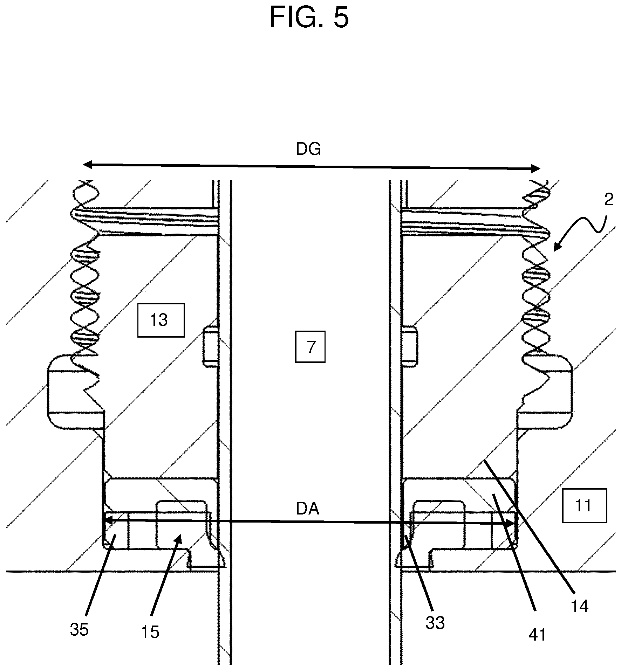

Im Folgenden wird unter Bezugnahme auf FIG. 5 eine weitere Ausführungsform für einen erfindungsgemäßen Prozessanschluss 3 mit einer entsprechend eingesetzten Sensoreinheit 2 beschrieben.

Nachdem das hier gezeigte Ausführungsbeispiel in großen Teilen demjenigen aus

FIG. 4 entspricht, wird hier nicht jedes einzelne Merkmal explizit erneut beschrieben, sondern lediglich auf die entsprechenden Ausführungen aus dem vorherigen Abschnitt verwiesen. Lediglich die strukturellen und funktionellen Unterschiede zu der in FIG. 4 gezeigten Ausführungsform werden genauer beschrieben.

Der Wesentliche Unterschied liegt dabei darin, dass in der in FIG. 5 gezeigten Ausführungsform der Fixierkragen 33 und der Distanzring 35 nicht als Bestandteile des inneren Gewindeadapters 13 gebildet sind.

Konkret ist hier der Distanzring 35 als eigenständige und von dem inneren Gewindeadapter 13 separate Komponente in Gestalt eines radial umlaufenden Rings ausgebildet.

Der Fixierkragen 33 ist als Teil einer eingenständigen und von dem inneren Gewindeadapter 13 separaten Druckscheibe 41, welche zwischen dem inneren Gewindeadapter 13 und der Formdichtung 15 positioniert ist, ausgebildet. Der Distanzring 35 ist beispielsweise, wie abgebildet, zwischen der separaten Druckscheibe 41 und dem hohlzylindrischen Vorsprung 27 vorgesehen. Alternativ dazu kann der Distanzring 35 auch die Druckscheibe 41 radial umgebend in Kontakt mit dem inneren Gewindeadapter 13 und dem hohlzylindrischen Vorsprung 27 vorgesehen sein.

Um bei der axialen Verpressung der Formdichtung 15 durch den inneren Gewindeadapter 13 eine radial umlaufende Verspannung der Formdichtung 15 zu vermeiden, ist insbesondere eine Reibung zwischen dem inneren Gewindeadapter 13 und der Druckscheibe 41 kleiner eingestellt, als zwischen der Druckscheibe 41 und der Formdichtung 15. Insbesondere wirkt die Kontaktfläche zwischen der Druckscheibe 41 und dem inneren Gewindeadapter 13 als Gleitlager. Alternativ dazu könnte jedoch bei Bedarf auch die Kontaktfläche zwischen der Druckscheibe 41 und der Formdichtung 15 die kleinere Reibung aufweisen und insbesondere als Gleitlager wirken, wobei diese Ausgestaltung materialseitig schwieriger umzusetzen ist.

Zur vereinfachten Montage und Bildung eines robusten Gesamtsystems, ist der Außendurchmesser DA der Druckscheibe und insbesondere auch des Distanzrings 35 kleiner-gleich dem Gewindedurchmesser DG.

Ergänzend zu den beiden gezeigten Ausführungsformen aus den Figuren 4 und 5 sind auch Mischformen dieser denkbar. Konkret könnte beispielsweise lediglich der Distanzring 35 als von dem inneren Gewindeadapter 13 separate Komponente gebildet sein, während der Fixierkragen 33 und ggf. die Druckscheibe 41 in den inneren Gewindeadapter integriert sind.

Abschließend sei im Lichte dessen darauf hingewiesen, dass es sich bei den beschriebenen Ausführungsformen lediglich um Beispiele handelt, welche den Gegenstand der anhängigen Ansprüche in keinerlei Weise einschränken. Einem Fachmann stehen viele Abwandlungen und Modifikationen zur Verfügung, welche vom Schutzumfang der beiliegenden Ansprüche umfasst sind, hier jedoch nicht explizit beschrieben wurden.

### Bezugszeichenliste

- 1: Sensorbaugruppe
- 2: Sensoreinheit
- 3: Prozessanschluss
- 5: Einschraubverbindung
- 7: Messsonde
- 9: Fixierungsmittel
- 11: äußerer Gewindeadapter
- 13: innerer Gewindeadapter
- 14: zylindrischer Ansatz
- 15: Formdichtung
- 17: Einschraubabschnitt
- 19: Auffangnut
- 21: Ablaufkanal
- 23: Kontaktring
- 24: weiterer Auffangbereich
- 25: Steuer und/oder Auswerteinheit
- 27: hohlzylindrischer Vorsprung
- 29: Hauptkörper
- 31: Dichtungskragen
- 33: Fixierkragen
- 35: Distanzring
- 37: Nut
- 39: Zentrierring
- 41: Druckscheibe
- BK: Dichtungskragenbreite
- DA: Außendurchmesser
- DD: Durchgangsdurchmesser
- DG: Gewindedurchmesser
- DDI: Innendurchmesser der Formdichtung
- DHA: Hauptkörperaußendurchmesser
- DHI: Hauptkörperinnendurchmesser
- DKA: Außendurchmesser des Fixierkragens
- DMA: Messsondenaußendurchmesser
- DVI: Vorsprungsinnendurchmesser
- HD: Distanzringhöhe
- HH: Hauptkörperhöhe

## Patentansprüche

1. Prozessanschluss (3), insbesondere für eine Sensoreinheit (2) in einer Prozessanlage, wobei der Prozessanschluss (3) umfasst:
einen äußeren Gewindeadapter (11) mit einem Einschraubkanal, welcher mit einem Innengewinde versehen ist;
einen inneren Gewindeadapter (13) mit einem zylindrischen Durchgangskanal und einem Außengewinde; und
eine ringförmige Formdichtung (15);
wobei der äußere Gewindeadapter (11) an einem Ende des Einschraubkanals einen radial umlaufenden nach Innen hervorstehenden hohlzylindrischen Vorsprung (27) aufweist,
wobei das Außengewinde des inneren Gewindeadapters (13) mit dem Innengewinde des äußeren Gewindeadapters (11) in Schraubeingriff steht,
wobei die ringförmige Formdichtung (15) innerhalb des Einschraubkanals des äußeren Gewindeadapters (11) in axialer und in radialer Richtung an dem besagten hohlzylindrischen Vorsprung (27) anliegt,
wobei der innere Gewindeadapter (13) dazu ausgebildet ist, die Formdichtung (15) in der axialen Richtung auf eine im Wesentlichen senkrecht zur axialen Richtung ausgerichtete Deckfläche des hohlzylindrischen Vorsprungs (27) des äußeren Gewindeadapters (11) zu pressen,
**dadurch gekennzeichnet, dass**
der Prozessanschluss (3) einen Distanzring (35) aufweist, welcher im Inneren des äußeren Gewindeadapters (11) die Formdichtung (15) radial umgibt und auf dem hohlzylindrischen Vorsprung (27) aufliegt,
wobei der Distanzring (35) dazu ausgebildet ist, eine radiale Verformung der Formdichtung (15) beim Verpressen durch den inneren Gewindeadapter (13) und/oder den Grad der maximalen axialen Verpressung der Formdichtung (15) durch den inneren Gewindeadapter (13) zu beschränken.

2. Prozessanschluss (3) nach Anspruch 1,
wobei der innere Gewindeadapter (13) unterhalb dessen Außengewinde einen axial hervorstehenden zylindrischen Ansatz bzw. Fortsatz (14) aufweist und im äußeren Gewindeadapter (11) eine passgenaue Bohrung vorgesehen ist, welche den besagten Ansatz bzw. Fortsatz (14) aufnimmt, wobei die Bohrung im äußeren Gewindeadapter (11) konzentrisch mit der zentralen Längsachse des Prozessanschlusses (3) verläuft und der Durchgangskanal im inneren Gewindeadapter (13) konzentrisch zum zylindrischen Ansatz bzw. Fortsatz (14) verläuft.

3. Prozessanschluss (3) nach Anspruch 1 oder 2,
wobei der besagte Distanzring (35) entweder als axial hervorstehender Vorsprung des inneren Gewindeadapters (13) oder als von dem inneren Gewindeadapter (13) separate Komponente, insbesondere in Gestalt eines Kreisrings, welcher die Formdichtung in der radialen Richtung umschließt, ausgebildet ist.

4. Prozessanschluss (3) nach einem der vorhergehenden Ansprüche,
wobei der Prozessanschluss (3) eine Druckscheibe (41) aufweist, welche zwischen dem inneren Gewindeadapter (13) und der Formdichtung (15) vorgesehen ist,
wobei insbesondere der Distanzring (35) einstückig mit der Druckscheibe (41) ausgebildet ist.

5. Prozessanschluss (3) nach Anspruch 4,
wobei der innere Gewindeadapter (13), die Formdichtung (15) und die Druckscheibe (41) derart gebildet sind, dass die Reibung zwischen der Formdichtung (15) und der Druckscheibe (41) größer als die Reibung zwischen dem inneren Gewindeadapter (13) und der Druckscheibe (41) ist, wobei insbesondere die Kontaktfläche zwischen dem inneren Gewindeadapter (13) und der Druckscheibe (41) als Gleitlager ausgebildet ist.

6. Prozessanschluss (3) nach einem der vorhergehenden Ansprüche, wobei der innere Gewindeadapter (13), oder falls vorgesehen die Druckscheibe (41), entlang seines inneren Umfangs einen axial hervorstehenden Fixierkragen (33) aufweist, welcher in die Formdichtung (15) hineingreift.

7. Prozessanschluss (3) nach Anspruch 6,
wobei die Differenz der Höhe (HD) des Distanzrings (35) von der Kragenhöhe (HK) des besagten Fixierkragens (33) kleiner-gleich 0,1 mm ist, wobei insbesondere die Kragenhöhe (HK) des Fixierkragens (33) gleich der Höhe (HD) des Distanzrings (35) oder bis zu 5 % oder bis zu 10 % oder bis zu 15%, bevorzugt 0,1 mm, größer als die Höhe (HD) des Distanzrings (35) ist.

8. Prozessanschluss (3) nach einem der vorhergehenden Ansprüche, wobei die Formdichtung (15) einen ringförmigen Hauptkörper (29) mit einem Innendurchmesser (DHI), der kleiner als der Innendurchmesse (DVI) des hohlzylindrischen Vorsprungs (27) ist, und einem Außendurchmesser (DHA), der größer als der Innendurchmesser (DVI) des hohlzylindrischen Vorsprungs (27) ist, aufweist,
wobei der Hauptkörper (29) im entspannten Zustand der Formdichtung (15) insbesondere einen rechteckigen, quadratischen, ovalen oder runden Querschnitt aufweist,
wobei der Fixierkragen (33) insbesondere einen Außendurchmesser (DA) aufweist, welcher kleiner-gleich dem Innendurchmesser (DHI) des Hauptkörpers (29) der Formdichtung (15) ist.

9. Prozessanschluss (3) nach Anspruch 7 oder 8 mit den Merkmalen des Anspruch 3,
wobei der Hauptkörper (29) der Formdichtung (15) und der Distanzring (35) derart bemessen sind, dass eine maximale axiale Verformung (also ein Klemmmaß) des Hauptkörpers (29) der Formdichtung (15) beim Verpressen durch den inneren Gewindeadapter (13) auf 0,2mm bis 0,9mm beschränkt ist.

10. Prozessanschluss (3) nach einem der Ansprüche 7 bis 9,
wobei die Formdichtung (15) ferner einen, insbesondere radial umlaufenden und bevorzugt schwalbenschwanzförmigen, Dichtungskragen (31) aufweist, welcher in die Öffnung im Inneren des hohlzylindrischen Vorsprungs (27) hineinragt,
wobei dieser Dichtungskragen (31) im entspannten Zustand der Formdichtung (15) zumindest abschnittsweise eine Breite (BK) aufweist, welche größer als die Differenz zwischen dem Innendurchmesser (DVI) des hohlzylindrischen Vorsprungs (27) und dem Außendurchmesser (DMA) einer durch den Prozessanschluss (3) zu führenden Messsonde (7) ist.

11. Prozessanschluss (3) nach einem der vorgehenden Ansprüche,
wobei der Durchmesser (DD) des Durchgangskanals des inneren Gewindeadapters (13), und falls vorgesehen der Innendurchmesser (DD) der Druckscheibe (41) und/oder des Fixierkragens (33), gleich einem Außendurchmesser (DMA) einer durch den Prozessanschluss (3) zu führenden Messsonde (7) ist, und/oder
wobei der Durchmesser (DG) des Außengewindes des inneren Gewindeadapters (13) bzw. der Durchmesser (DG) der Innengewindes des äußeren Gewindeadapters (11) gleich dem Durchmesser (DG) des Außengewindes des Einschraubabschnitts (17) einer Einschraubverbindung (5) einer mit dem Prozessanschluss (3) zu koppelnden Sensoreinheit (2) ist, wobei insbesondere der Außendurchmesser (DA) des Distanzrings (35) und/oder der Außendurchmesser (DA) der Druckscheibe (41), sofern vorhanden, kleiner-gleich dem besagten Gewindedurchmesser (DG) ist.

12. Prozessanschluss (3) nach einem der vorhergehenden Ansprüche,
wobei der innere Gewindeadapter (13) eine in seinem Inneren umlaufende Nut (37) aufweist, in welcher ein Zentrierring (39), insbesondere in Gestalt eines O-Rings, vorgesehen ist,
wobei der besagte Zentrierring (39) einen Innendurchmesser aufweist, welcher kleiner als der Außendurchmesser (DMA) einer entsprechenden Messsonde (7) ist, und einen Außendurchmesser aufweist, welcher größer als der Durchmesser (DD) des Durchgangskanals des inneren Gewindeadapters (13) ist.

13. Prozessanschluss (3) nach einem der vorhergehenden Ansprüche,
wobei der Einschraubkanal des äußeren Gewindeadapters (11) eine radial umlaufende Auffangnut (19) aufweist, welche axial zwischen dem Innengewinde des äußeren Gewindeadapters (11) und dem hohlzylindrischen Vorsprung (27) vorgesehen ist und radial über das Innengewinde der äußeren Gewindeadapters (11) hinausragt,
wobei der äußere Gewindeadapter (11) ferner insbesondere einen sich radial erstreckenden Ablaufkanal (21) aufweist, welcher mit der Auffangnut (19) verbunden ist.

14. Sensorbaugruppe (1) für eine Prozessanlage, umfassend;
eine Sensoreinheit (2) mit einer Einschraubverbindung (5) und einer Messsonde (7), welche durch die Einschraubverbindung (5) geführt ist und einen Messkopf (8) aufweist; und
einen Prozessanschluss (3) gemäß einem der vorhergehenden Ansprüche; wobei die Einschraubverbindung (5) einen Einschraubabschnitt (17) mit einem Außengewinde aufweist,
wobei die Einschraubverbindung (5) mit dem Außengewinde des Einschraubabschnitts (5) derart von demjenigen Ende, welches dem hohlzylindrischen Vorsprung (27) des äußeren Gewindeadapters (11) gegenüberliegt, in den Einschraubkanal des Prozessanschlusses (3) eingeschraubt ist, dass der Messkopf (8) der Messsonde (7) durch den hohlzylindrischen Vorsprung (27) aus dem Prozessanschluss (3) hindurchragt oder zumindest mit diesem abschließt.

15. Prozessanlage mit wenigstens einer Sensorbaugruppe (1) nach Anspruch 14 und/oder wenigstens einem Prozessanschluss (3) nach einem der vorhergehenden Ansprüche 1 bis 13.

## Claims

1. A process connection (3), in particular for a sensor unit (2) in a process plant, wherein the process connection (3) comprises:
an external threaded adapter (11) which has a screw-in passage and which is provided with an internal thread;
an internal threaded adapter (13) having a cylindrical through passage and
an external thread; and
an annular molded seal (15),
wherein the external threaded adapter (11) has a radially peripheral inwardly projecting hollow cylindrical projection (27) at one end of the screw-in passage,
wherein the external thread of the internal threaded adapter (13) is in screw engagement with the internal thread of the external threaded adapter (11),
wherein the annular molded seal (15) contacts said hollow cylindrical projection (27) in the axial and radial direction within the screw-in passage of the external threaded adapter (11),
wherein the internal threaded adapter (13) is configured to press the molded seal (15) in the axial direction onto a cover surface of the hollow cylindrical projection (27) of the external threaded adapter (11), said cover surface being substantially oriented to the axial direction,
**characterized in that**
the process connection (3) has a spacer ring (35) which radially surrounds the molded seal (15) in the interior of the external threaded adapter (11) and rests on the hollow cylindrical projection (27),
wherein the spacer ring (35) is configured to limit a radial deformation of the molded seal (15) during the pressing by the internal threaded adapter (13) and/or the degree of the maximum axial pressing of the molded seal (15) by the internal threaded adapter (13).

2. A process connection (3) according to claim 1,
wherein the internal threaded adapter (13) has an axially projecting cylindrical lug or prolongation (14) below its external thread and a precisely fitting bore is provided in the external threaded adapter (11) and receives said lug or prolongation (14),
wherein the bore in the external threaded adapter (11) extends concentrically with the central longitudinal axis of the process connection (3) and the through passage in the internal threaded adapter (13) extends concentrically with the cylindrical lug or prolongation (14).

3. A process connection (3) according to claim 1 or 2,
wherein said spacer ring (35) is configured as an axially projecting projection of the internal threaded adapter (13) or as a separate component from the internal threaded adapter (13), in particular in the form of a circular ring which surrounds the molded seal in the radial direction.

4. A process connection (3) according to any one of the preceding claims,
wherein the process connection (3) has a thrust washer (41) which is provided between the internal threaded adapter (13) and the molded seal (15),
wherein in particular the spacer ring (35) is formed in one piece with the thrust washer (41).

5. A process connection (3) according to claim 4,
wherein the internal threaded adapter (13), the molded seal (15) and the thrust washer (41) are formed such that the friction between the molded seal (15) and the thrust washer (41) is greater than the friction between the internal threaded adapter (13) and the thrust washer (41),
wherein in particular the contact surface between the internal threaded adapter (13) and the thrust washer (41) is configured as a sliding bearing.

6. A process connection (3) according to any one of the preceding claims, wherein the internal threaded adapter (13), or - if provided - the thrust washer (41), has an axially projecting fixing collar (33), which engages into the molded seal (15), along its inner periphery.

7. A process connection (3) according to claim 6,
wherein the difference in the height (HD) of the spacer ring (35) from the collar height (HK) of said fixing collar (33) is less than or equal to 0.1 mm,
wherein in particular the collar height (HK) of the fixing collar (33) is equal to the height (HD) of the spacer ring (35) or is up to 5% or up to 10% or up to 15%, preferably 0.1 mm, greater than the height (HD) of the spacer ring (35).

8. A process connection (3) according to any one of the preceding claims,
wherein the molded seal (15) has an annular main body (29) having an inner diameter (DHI) which is smaller than the inner diameter (DVI) of the hollow cylindrical projection (27) and having an outer diameter (DHA) which is larger than the inner diameter (DVI) of the hollow cylindrical projection (27),
wherein the main body (29) in particular has a rectangular, square, oval or round cross-section in the relaxed state of the molded seal (15), wherein the fixing collar (33) in particular has an outer diameter (DA) which is less than or equal to the inner diameter (DHI) of the main body (29) of the molded seal (15).

9. A process connection (3) according to claim 7 or 8 having the features of claim 3,
wherein the main body (29) of the molded seal (15) and the spacer ring (35) are dimensioned such that a maximum axial deformation (i.e. a clamping dimension) of the main body (29) of the molded seal (15) is limited to 0.2mm to 0.9mm during the pressing by the internal threaded adapter (13).

10. A process connection (3) according to any one of the claims 7 to 9,
wherein the molded seal (15) further has a sealing collar (31), in particular a radially peripheral and preferably dovetail-shaped sealing collar, which projects into the opening in the interior of the hollow cylindrical projection (27),
wherein, in the relaxed state of the molded seal (15), this sealing collar (31) at least sectionally has a width (BK) which is greater than the difference between the inner diameter (DVI) of the hollow cylindrical projection (27) and the outer diameter (DMA) of a measurement probe (7) to be guided through the process connection (3).

11. A process connection (3) according to any one of the preceding claims,
wherein the diameter (DD) of the through passage of the internal threaded adapter (13), and - if provided - the inner diameter (DD) of the thrust washer (41) and/or the fixing collar (33), is equal to an outer diameter (DMA) of a measurement probe (7) to be guided through the process connection (3), and/or
wherein the diameter (DG) of the external thread of the internal threaded adapter (13) or the diameter (DG) of the internal thread of the external threaded adapter (11) is equal to the diameter (DG) of the external thread of the screw-in section (17) of a screw-in connection (5) of a sensor unit (2) to be coupled to the process connection (3),
wherein in particular the outer diameter (DA) of the spacer ring (35) and/or the outer diameter (DA) of the thrust washer (41), if present, is less than or equal to said thread diameter (DG).

12. A process connection (3) according to any one of the preceding claims, wherein the internal threaded adapter (13) has a peripheral groove (37) in its interior, in which peripheral groove (37) a centering ring (39), in particular in the form of an O-ring, is provided,
wherein said centering ring (39) has an inner diameter which is smaller than the outer diameter (DMA) of a corresponding measurement probe (7) and has an outer diameter which is larger than the diameter (DD) of the through passage of the internal threaded adapter (13).

13. A process connection (3) according to any one of the preceding claims, wherein the screw-in passage of the external threaded adapter (11) has a radially peripheral collection groove (19) which is provided axially between the internal thread of the external threaded adapter (11) and the hollow cylindrical projection (27) and which projects radially beyond the internal thread of the external threaded adapter (11),
wherein the external threaded adapter (11) further in particular has a radially extending drain passage (21) which is connected to the collection groove (19).

14. A sensor assembly (1) for a process system, comprising:
a sensor unit (2) having a screw-in connection (5) and a measurement probe (7) which is guided through the screw-in connection (5) and which has a measurement head (8); and
a process connection (3) according to any one of the preceding claims,
wherein the screw-in connection (5) has a screw-in section (17) having an external thread,
wherein the screw-in connection (5) is screwed into the screw-in passage of the process connection (3) with the external thread of the screw-in section (5) from that end which is disposed opposite the hollow cylindrical projection (27) of the external threaded adapter (11) such that the measurement head (8) of the measurement probe (7) projects through the hollow cylindrical projection (27) out of the process connection (3) or at least terminates with it.

15. A process plant comprising at least one sensor assembly (1) according to claim 14 and/or at least one process connection (3) according to any one of the preceding claims 1 to 13.

## Revendications

1. Raccord de processus (3), en particulier pour un ensemble capteur (2) dans une installation de processus, le raccord de processus (3) comprenant :
un adaptateur taraudé (11) extérieur ayant un canal de vissage qui est pourvu d'un taraudage ;
un adaptateur fileté (13) intérieur ayant un canal de passage cylindrique et
un filetage ; et
un joint d'étanchéité profilé annulaire (15) ;
l'adaptateur taraudé (11) extérieur présentant, à une extrémité du canal de vissage, une saillie cylindrique creuse (27) radialement périphérique qui fait saillie vers l'intérieur,
le filetage de l'adaptateur fileté (13) intérieur étant en prise par vissage avec le taraudage de l'adaptateur taraudé (11) extérieur,
à l'intérieur du canal de vissage de l'adaptateur taraudé (11) extérieur, le joint d'étanchéité profilé annulaire (15) étant en appui contre ladite saillie cylindrique creuse (27) dans la direction axiale et dans la direction radiale,
l'adaptateur fileté (13) intérieur étant conçu pour presser le joint d'étanchéité profilé (15) dans la direction axiale sur une surface de couverture de la saillie cylindrique creuse (27) de l'adaptateur taraudé (11) extérieur, surface qui est orientée sensiblement perpendiculairement à la direction axiale,
**caractérisé en ce que**
le raccord de processus (3) présente une bague d'écartement (35) qui, à l'intérieur de l'adaptateur taraudé (11) extérieur, entoure radialement le joint d'étanchéité profilé (15) et qui repose sur la saillie cylindrique creuse (27),
la bague d'écartement (35) étant conçue pour limiter une déformation radiale du joint d'étanchéité profilé (15) lors du pressage par l'adaptateur fileté (13) intérieur et/ou le degré de pressage axial maximal du joint d'étanchéité profilé (15) par l'adaptateur fileté (13) intérieur.

2. Raccord de processus (3) selon la revendication 1,
dans lequel l'adaptateur fileté (13) intérieur présente, sous son filetage, un appendice ou un prolongement cylindrique (14) faisant saillie axialement, et un perçage précis correspondant est prévu dans l'adaptateur taraudé (11) extérieur, qui reçoit ledit appendice ou prolongement (14),
le perçage dans l'adaptateur taraudé (11) extérieur est concentrique à l'axe longitudinal central du raccord de processus (3), et le canal de passage dans l'adaptateur fileté (13) intérieur est concentrique à l'appendice ou au prolongement cylindrique (14).

3. Raccord de processus (3) selon la revendication 1 ou 2,
dans lequel ladite bague d'écartement (35) est formée soit comme une saillie axiale de l'adaptateur fileté (13) intérieur, soit comme un composant séparé de l'adaptateur fileté (13) intérieur, en particulier sous la forme d'une bague circulaire qui entoure le joint d'étanchéité profilé dans la direction radiale.

4. Raccord de processus (3) selon l'une des revendications précédentes,
dans lequel le raccord de processus (3) présente une rondelle de pression (41) qui est prévue entre l'adaptateur fileté (13) intérieur et le joint d'étanchéité profilé (15),
en particulier, la bague d'écartement (35) est formée d'un seul tenant avec la rondelle de pression (41).

5. Raccord de processus (3) selon la revendication 4,
dans lequel l'adaptateur fileté (13) intérieur, le joint d'étanchéité profilé (15) et la rondelle de pression (41) sont formés de telle sorte que le frottement entre le joint d'étanchéité profilé (15) et la rondelle de pression (41) est supérieur au frottement entre l'adaptateur fileté (13) intérieur et la rondelle de pression (41),
en particulier, la surface de contact entre l'adaptateur fileté (13) intérieur et la rondelle de pression (41) est réalisée sous forme de palier lisse.

6. Raccord de processus (3) selon l'une des revendications précédentes, dans lequel l'adaptateur fileté (13) intérieur ou la rondelle de pression (41), si présente, comprend le long de sa périphérie intérieure une collerette de fixation (33) qui fait saillie axialement et qui s'engage dans le joint d'étanchéité profilé (15).

7. Raccord de processus (3) selon la revendication 6,
dans lequel la différence entre la hauteur (HD) de la bague d'écartement (35) et la hauteur (HK) de ladite collerette de fixation (33) est inférieure ou égale à 0,1 mm,
en particulier, la hauteur (HK) de la collerette de fixation (33) est égale à la hauteur (HD) de la bague d'écartement (35) ou supérieure à la hauteur (HD) de la bague d'écartement (35) d'une valeur allant jusqu'à 5 % ou jusqu'à 10 % ou jusqu'à 15 %, de préférence de 0,1 mm.

8. Raccord de processus (3) selon l'une des revendications précédentes, dans lequel le joint d'étanchéité profilé (15) comprend un corps principal annulaire (29) ayant un diamètre intérieur (DHI) qui est inférieur au diamètre intérieur (DVI) de la saillie cylindrique creuse (27), et un diamètre extérieur (DHA) qui est supérieur au diamètre intérieur (DVI) de la saillie cylindrique creuse (27),
en particulier, le corps principal (29) présente une section transversale rectangulaire, carrée, ovale ou ronde à l'état détendu du joint d'étanchéité profilé (15),
en particulier, la collerette de fixation (33) présente un diamètre extérieur (DA) qui est inférieur ou égal au diamètre intérieur (DHI) du corps principal (29) du joint d'étanchéité profilé (15).

9. Raccord de processus (3) selon la revendication 7 ou 8 présentant les caractéristiques de la revendication 3,
dans lequel le corps principal (29) du joint d'étanchéité profilé (15) et la bague d'écartement (35) sont dimensionnés de telle sorte qu'une déformation axiale maximale (c'est-à-dire une valeur de serrage) du corps principal (29) du joint d'étanchéité profilé (15) lors du pressage par l'adaptateur fileté (13) intérieur est limitée à une valeur de 0,2 mm à 0,9 mm.

10. Raccord de processus (3) selon l'une des revendications 7 à 9,
dans lequel le joint d'étanchéité profilé (15) comprend en outre une collerette d'étanchéité (31), en particulier radialement périphérique et de préférence en forme de queue d'aronde, qui pénètre dans l'ouverture située à l'intérieur de la saillie cylindrique creuse (27),
ladite collerette d'étanchéité (31) présente, à l'état détendu du joint d'étanchéité profilé (15), au moins localement une largeur (BK) qui est supérieure à la différence entre le diamètre intérieur (DVI) de la saillie cylindrique creuse (27) et le diamètre extérieur (DMA) d'une sonde de mesure (7) à faire passer à travers le raccord de processus (3).

11. Raccord de processus (3) selon l'une des revendications précédentes, dans lequel le diamètre (DD) du canal de passage de l'adaptateur fileté (13) intérieur et le diamètre intérieur (DD) de la rondelle de pression (41), si présente, et/ou de la collerette de fixation (33) est égal à un diamètre extérieur (DMA) d'une sonde de mesure (7) à faire passer à travers le raccord de processus (3), et/ou
le diamètre (DG) du filetage de l'adaptateur fileté (13) intérieur ou le diamètre (DG) du taraudage de l'adaptateur taraudé (11) extérieur est égal au diamètre (DG) du filetage du tronçon à visser (17) d'une jonction de vissage (5) d'un ensemble capteur (2) à coupler au raccord de processus (3), en particulier, le diamètre extérieur (DA) de la bague d'écartement (35) et/ou le diamètre extérieur (DA) de la rondelle de pression (41), si présente, est inférieur ou égal audit diamètre de filetage/taraudage (DG).

12. Raccord de processus (3) selon l'une des revendications précédentes, dans lequel l'adaptateur fileté (13) intérieur présente, dans son volume intérieur, une rainure périphérique (37) dans laquelle est prévue une bague de centrage (39), en particulier sous la forme d'un joint torique,
ladite bague de centrage (39) présente un diamètre intérieur qui est inférieur au diamètre extérieur (DMA) d'une sonde de mesure correspondante (7), et un diamètre extérieur qui est supérieur au diamètre (DD) du canal de passage de l'adaptateur fileté (13) intérieur.

13. Raccord de processus (3) selon l'une des revendications précédentes, dans lequel le canal de vissage de l'adaptateur taraudé (11) extérieur présente une rainure collectrice (19) radialement périphérique qui est prévue axialement entre le taraudage de l'adaptateur taraudé (11) extérieur et la saillie cylindrique creuse (27) et qui dépasse radialement au-delà du taraudage de l'adaptateur taraudé (11) extérieur,
en particulier, l'adaptateur taraudé (11) extérieur présente en outre un canal d'écoulement (21) qui s'étend radialement et qui est relié à la rainure collectrice (19).

14. Module capteur (1) pour une installation de processus, comprenant :
un ensemble capteur (2) présentant une jonction de vissage (5) et une sonde de mesure (7) qui est passée à travers la jonction de vissage (5) et
qui présente une tête de mesure (8) ; et
un raccord de processus (3) selon l'une des revendications précédentes ;
dans lequel
la jonction de vissage (5) comprend un tronçon à visser (17) pourvu d'un filetage,
par le filetage du tronçon à visser (5), la jonction de vissage (5) est vissée dans le canal de vissage du raccord de processus (3) depuis l'extrémité qui est opposée à la saillie cylindrique creuse (27) de l'adaptateur taraudé (11) extérieur, de telle sorte que la tête de mesure (8) de la sonde de mesure (7) dépasse du raccord de processus (3) à travers la saillie cylindrique creuse (27) ou se termine au moins avec celui-ci.

15. Installation de processus comprenant au moins un module capteur (1) selon la revendication 14 et/ou au moins un raccord de processus (3) selon l'une des revendications précédentes 1 à 13.
